# EUROPÄISCHE PATENTANMELDUNG

(11) **EP 1 873 324 A2**
(43) Veröffentlichungstag der Anmeldung: **02.01.2008**
(21) Anmeldenummer: 07011337.8
(22) Anmeldetag: 08.06.2007
(51) Int. Cl.: E04F 11/18, F16B 5/02, F16M 11/04

(54) **Pfostenbeschlag**

(30) Priorität: 27.06.2006 DE 102006030756
(71) Anmelder: Treppenmeister GmbH, 71131 Jettingen (DE)
(72) Erfinder: Lammers, Heinz, 71131 Jettingen (DE)
(74) Vertreter: Hössle Kudlek & Partner

(57) **Zusammenfassung**

Die Erfindung betrifft einen Pfostenbeschlag (22), der zum Befestigen eines Pfostens an einem Bauwerk ausgebildet ist und eine Grundplatte (2) sowie zwei Befestigungsschrauben (24) umfasst, bei dem die Grundplatte (2) zwei Löcher (4) zur Aufnahme jeweils einer mit dem Pfosten (42) zu verbindenden Befestigungsschraube (24) aufweist, wobei die Löcher (4) derart ausgebildet sind, dass jeweils eine Befestigungsschraube (24) in jeweils einem Loch (4) zu führen ist, so dass der mit den Befestigungsschrauben (24) verbundene pfosten relativ zu der Grundplatte (2) verschwenkt werden kann.

## Beschreibung

Die Erfindung betrifft einen Pfostenbeschlag zum Befestigen eines Pfostens an einem Bauwerk, eine Grundplatte für einen Pfostenbeschlag sowie ein Verfahren zum Befestigen eines Pfostens an einem Bauwerk.

Um Pfosten an Bauwerken, bspw. an einer Treppe bzw. an Treppenstufen, zu befestigen, sind üblicherweise Pfostenbeschläge vorgesehen. Bei der Montage und somit dem Befestigen des Pfostens ist vorgesehen, dass zunächst Befestigungselemente zur Befestigung des Pfostenbeschlags an dem Bauwerk exakt gebohrt und gesetzt werden müssen, so dass der Pfosten nach endgültigem Befestigen an dem Bauwerk vertikal orientiert ist. Ein exaktes Bohren und Setzen von Befestigungselemente ist jedoch für einen Monteur keine einfache Aufgabe.

Daher werden Befestigungen für Befestigungselemente von Pfostenbeschlägen üblicherweise mit einem entsprechenden Spiel versehen, so dass jeweils eine Feinjustierung des gesamten Pfostenbeschlags möglich ist. Allerdings haben Pfostenbeschläge, die mit einem derartige Spiel versehen sind, den Nachteil, dass darin eingebrachte Kräfte nicht vollständig in das Bauwerk abgeleitet werden können.

Die Druckschrift DE 296 05 071 U1, die ein Geländer mit lotrecht an einer Wange befestigbaren Pfosten betrifft, beschreibt eine derartige Anordnung. Hierbei ist jeder Pfosten in einer an der Wange festlegbaren Verstelleinrichtung gehalten, durch die dieser Pfosten in zwei um 90° zueinander versetzte Ebenen geringfügig schwenkbar ist. Die Verstelleinrichtung umfasst eine mit der Wange verstellbare Grundplatte, die zwei Langlöcher aufweist, durch die Schrauben geführt sind, mit denen die Grundplatte an der Wange festlegbar ist. Hierbei erstreckt sich ein erstes der Langlöcher quer und ein zweites der Langlöcher parallel zur Längsachse des Pfostens. Der Pfosten ist über einen Halter und eine Auflageplatte, die mit der Grundplatte starr verbunden sind, befestigt.

Ein einstellbares Hefestigungsgrundelement für eine Befestigung von Geländerstäben ist in der Druckschrift DE 198 27 308 A1 beschrieben. Hierbei erfolgt eine genaue Justierung durch drei Stellschrauben und eine eingefräste Nut. Ein vorgefertigter Geländerstab wird in einem T-Nutenstein eingeschoben und leicht angezogen. Danach wird der Geländerstab durch Stellschrauben lotrecht ausgerichtet.

Ein montierbares Geländer zum Einbau in Treppen ist aus der Druckschrift DE 298 01 000 U1 bekannt. Dabei weist jeweils ein Pfosten des Geländers mit je einer flachen Seite im Abstand zueinander zugewandte rechteckige Stahlprofile auf, die an ihrem unteren Enden zusammen mit einem abstandhaltenden Zwischenstück und mit äußeren Befestigungsmitteln miteinander verschraubbar sind. Außerdem ist hier jedes Stahlprofil an seinem unteren Ende über eine Platte an der Wand zu befestigen. Dabei ist das Ende jedes Stahlprofils über eine Gelenkverbindung an der Platte angelenkt. Zur Fixierung des Stahlprofils in einem beliebigen Winkel zwischen 0 und +/- 45° weist die Platte eine Kreisbogenführung auf, über die das Stahlprofil mit einer Feststellschraube in einem beliebigem Winkel feststellbar ist.

Vor diesem Hintergrund werden ein Pfostenbeschlag, eine Grundplatte sowie ein Verfahren mit den Merkmalen der unabhängigen Patentansprüche vorgestellt.

Die Erfindung betrifft einen Pfostenbeschlag, der zum Befe - stigen eines Pfostens an einem Bauwerk ausgebildet ist und eine Grundplatte sowie zwei Befestigungsschrauben umfasst. Dabei weist die Grundplatte zwei Löcher zur Aufnahme jeweils einer mit dem Pfosten zu verbindenden Befestigungsschraube auf, wobei die Löcher der Grundplatte derart ausgebildet sind, dass jeweils eine Befestigungsschraube in jeweils einem Loch zu führen ist, so dass der mit den Befestigungsschrauben verbundene Pfosten relativ zu der Grundplatte zu verschwenken ist.

Durch Ausgestaltung der Löcher der Grundplatte des Pfostenbeschlags ist jeder Befestigungsschraube ein Bewegungsspielraum relativ zu der Grundplatte gegeben. Dies ist auch dann der Fall, wenn die Grundplatte bereits an dem Bauwerk befestigt ist. Ein Querschnitt jeweils eines der Löcher ist typischerweise derart ausgebildet, dass die darin aufgenommene Schraube in zwei Richtungen parallel zu der Grundplatte bzw. einer Ebene, die durch die Grundplatte geht, bewegt oder geführt werden kann.

Vor einer endgültigen Befestigung des Pfostens an dem Bauwerk über den Pfostenbeschlag kann der Pfosten relativ zu der Grundplatte des Pfostenbeschlags bewegt und somit in geeigneter Weise justiert werden.

Es ist vorgesehen, dass der erfindungsgemäße Pfostenbeschlag die erfindungsgemäße Grundplatte in allen denkbaren Ausführungsformen als zentrales Modul umfasst. Außerdem umfasst der Pfostenbeschlag weitere Module, die ebenfalls mit der Grundplatte in möglichen Ausgestaltungen zusammenwirken. Bei derartigen Modulen handelt es sich bspw. um Gegenmuttern, mit denen die Befestigungsschrauben über die Löcher der Grundplatte zu verschrauben sind.

Befestigungselemente, die zum Befestigen der Grundplatte und somit auch zum Befestigen des Pfostenbeschlags an dem Bauwerk ausgebildet sind, sind in der Regel jedoch nicht als Bestandteile des Pfostenbeschlags anzusehen. Falls die Grundplatte und somit der Pfostenbeschlag an Stein oder Beton zu befestigen ist, wird als Befestigungselement typischerweise ein Schwerlastanker verwendet. Bei anderen Materialien, wie bspw. Holz, kann als Befestigungselement eine Schraube verwendet werden.

In Ausgestaltung ist vorgesehen, dass der Pfosten, der unterschiedliche Formen aufweisen kann und dabei im Querschnitt rund oder eckig, insbesondere viereckig oder quadratisch, ausgebildet ist, zwei Aufnahmelöcher aufweist. Diese Aufnahmelöcher sind zum Durchführen der Befestigungsschrauben vorgesehen, wobei die Befestigungsschrauben Köpfe aufweisen, die dazu ausgebildet sind, an einer Außenseite des Pfostens, die Aufnahmelöcher abdeckend, anzuliegen.

Die Befestigungsschrauben sind typischerweise länglich ausgebildet. Zur Montage und somit zum Befestigen des Pfostens ist vorgesehen, dass die Köpfe an ersten Enden der Befestigungsschrauben, die im montierten Zustand dem Bauwerk abgewandt sind, angeordnet sind.

Die Befestigungsschrauben durchqueren ausgehend von dem ersten Ende zuerst die Aufnahmelöcher des Pfostens, ggf, variable und somit in ihrer Länge einstellbare Abstandshalter sowie die Löcher der Grundplatte. An zweiten Enden weisen die Befestigungsschrauben Gewinde auf, über die die Befestigungsschrauben an der Grundplatte verschraubt sind.

Die Abstandshalter weisen wiederum Öffnungen auf, wobei durch jeweils einen Abstandshalter eine Befestigungsschraube zu führen ist, so dass jeder Abstandshalter eine Befestigungsschraube koaxial ummantelt. Außerdem ist vorgesehen, dass die Abstandshalter zum Befestigen des Pfostens an der Grundplatte zwischen dem Pfosten und der Grundplatte angeordnet werden können, wobei die insbesondere variablen Abstandshalter den Pfosten und die Grundplatte voneinander beabstanden.

Ein Abstandshalter mit einer konstanten Länge ist typischerweise als ein Rohr ausgebildet. Ein variabler Abstandshalter ist dagegen in der Regel aus zwei über ein Gewinde miteinander verschraubten Rohren gebildet. Die Länge des variablen Abstandshalters kann durch Verstellen der Gewindetiefe variabel eingestellt werden. Damit kann bei montiertem Pfosten noch eine Feinjustierung des Abstands des Pfostens zu dem Bauwerk und/oder der Senkrechtstellung des Pfostens erfolgen.

Zur Feinjustierung der Senkrechtstellung des Pfostens sind insgesamt zwei Freiheitsgrade gegeben. Ein erster Freiheitsgrad für eine Feinjustierung parallel zu einer Oberfläche des Bauwerks ist durch das Verschwenken relativ zu der Grundplatte möglich, wobei die Befestigungsschrauben entlang den Löchern der Grundplatte geführt werden. Der zweite Freiheitsgrad ergibt sich durch eine Einstellung der Längen der variablen Abstandshalter.

Zum Befestigen des Pfostens ist vorgesehen, dass entlang der Befestigungsschrauben zwischen den Köpfen der Befestigungsschraube und den Gegenmuttern die Grundplatte, die Abstandshalter sowie der Pfosten entlang der Befestigungsschraube einzuklemmen und somit aneinanderzudrücken sind.

Außerdem kann der Pfostenbeschlag eine zum Abdecken der Grundplatte ausgebildete Abdeckplatte umfassen. Diese Abdeckplatte dient bspw. auch einem dekorativen Zweck und weist zwei Rundlöcher auf, durch die die Befestigungsschrauben zu führen sind. Es ist vorgesehen, dass die Abdeckplatte die Grundplatte bündig umschließt und somit ebenfalls wie die Grundplatte eine voranging runden Querschnitt aufweist. Die Rundlöcher der Abdeckplatte sind derart positioniert, dass diese in die Löcher der Grundplatte münden. Dabei weist jeweils ein Rundloch einen Durchmesser auf, der ein Durchführen einer Befestigungsschraube erlaubt.

Die erfindungsgemäße Grundplatte für einen Pfostenbeschlag ist zum Befestigen eines Pfostens an einem Bauwerk vorgesehen. Die Grundplatte weist zwei Löcher zur Aufnahme jeweils einer mit dem Pfosten zu verbindenden Befestigungsschraube auf. Die Löcher der Grundplatte sind derart ausgebildet, dass jeweils eine Befestigungsschraube in jeweils einem Loch zu führen ist, so dass der mit den Befestigungsschrauben verbundene Pfosten relativ zu der Grundplatte zu verschwenken ist.

Die Grundplatte ist insbesondere zur Befestigung von Pfosten einer Absturzsicherung und somit bspw. eines Geländers geeignet . Die Grundplatte und somit der Pfostenbeschlag können überall dort eingesetzt werden, wo Pfosten für derartige Absturzsicherungen benötigt werden. Die Pfosten sind an Bauwerken, die als Deckenränder, Treppen oder Balkone ausgebildet sind, zu befestigen. Es ist vorgesehen, dass der Pfosten über die beiden Befestigungsschrauben, die in Löchern der Grundplatte aufgenommen sind, mit der Grundplatte verbunden ist. Die in den Löchern aufgenommenen Befestigungsschrauben sind üblicherweise senkrecht zu der Grundplatte orientiert. Der Pfosten ist je nach Einbausituation weitgehend senkrecht zu den Befestigungsschrauben orientiert.

Die über die Löcher zu führenden Befestigungsschrauben sind somit relativ zu der Grundplatte beweglich, so dass der Pfosten wiederum parallel zu dem Bauwerk bewegt werden kann, wenn die Grundplatte an dem Bauwerk befestigt ist. Vor der endgültigen Befestigung an der Grundplatte kann der Pfosten in einer gewünschten Position oder unter einem gewünschten Winkel ausgerichtet oder eingestellt werden.

In Ausgestaltung sind die beiden Löcher der Grundplatte als gebogene Langlöcher ausgebildete so dass die Befestigungsschrauben entlang dieser Löcher zu führen sind. Außerdem kann vorgesehen sein, dass die Löcher hinsichtlich ihrer Form zueinander symmetrisch angeordnet sind. Dabei können die beiden Löcher wie zwei gegenüberliegende Bogenabschnitte einer Ellipse oder eines Kreises angeordnet sein. In einer alternativen Ausgestaltung sind die beiden Löcher zueinander parallel angeordnet. Zweckmäßigerweise sind die beiden Löcher hinsichtlich ihrer Form und Anordnung derart ausgebildet, dass zum Ausrichten des Pfostens beide Schrauben in den Löchern zu bewegen oder zu verschieben sind, wobei ein Abstand zwischen den beiden Schrauben konstant bleibt.

Es kann außerdem vorgesehen sein, dass jeweils eines der Löcher zur Aufnahme einer Gegenmutter, die mit jeweils einer der Befestigungsschrauben zu verschrauben ist, ausgebildet ist. Zum Befestigen der Befestigungsschraube an der Grundplatte und somit auch zum Befestigen des Pfostens ist vorgesehen, dass beim Andrehen der Befestigungsschraube die Gegenmutter in dem jeweiligen Loch fixiert werden kann.

Zur Befestigung der Grundplatte an dem Bauwerk weist diese mindestens zwei Befestigungslöcher auf, wobei jeweils ein Befestigungsloch zur Aufnahme eines im Bauwerk zu verankernden Befestigungselements ausgebildet ist. Zum Befestigen der Grundplatte ist eine lediglich grobe Positionierung der Grundplatte an dem Bauwerk erforderlich, da der Pfosten vor dem endgültigen Befestigen in geeigneter Weise ausgerichtet werden kann. Außerdem können die Befestigungslöcher Ausnehmungen aufweisen, über die die Befestigungselemente in den Befestigungslöchern und somit innerhalb der Grundplatte zu versenken sind.

Die Grundplatte weist typischerweise einen runden Querschnitt auf. Zudem können die insbesondere als gebogene Langlöcher ausgebildeten Löcher der Grundplatte punktsymmetrisch zu dem Mittelpunkt der Grundplatte und somit auf einer Kreisbahn um diesen Mittelpunkt angeordnet sein. In diesem Fall ist es möglich, den Pfosten zentriert zu der Grundplatte auszurichten oder zu drehen.

Die Erfindung betrifft außerdem ein Verfahren zum Befestigen eines Pfostens an einem Bauwerk mittels einer Grundplatte. Hierzu werden zwei Befestigungsschrauben in Löchern der Grundplatte aufgenommen. Außerdem wird jeweils eine Befestigungsschraube mit dem Pfosten verbunden, Zum Ausrichten des Pfostens relativ zu der Grundplatte wird der Pfosten verschwenkt, wobei jeweils eine Befestigungsschraube in jeweils einem Loch geführt wird.

Somit kann der Pfosten vor einem endgültigen Befestigen relativ zu der Grundplatte und somit auch relativ zu dem Bauwerk justiert werden. Hierbei werden die Befestigungsschrauben zum Verschwenken des Pfostens entlang der insbesondere als gebogene Langlöcher ausgebildeten Löcher geführt und geeignet positioniert.

Das Verfahren zum Befestigen des Pfostens kann mehrere Schritte aufweisen. Zur Vorbereitung werden die Befestigungsschrauben durch die Aufnahmelöcher des Pfostens durchgeschoben, so dass die Befestigungsschrauben mit dem Pfosten verbunden sind. Außerdem sind die zweiten Enden der Befestigungsschrauben durch die Löcher der Grundplatte durchzustecken. In einem ersten Schritt wird die Grundplatte über die Befestigungselemente an dem Bauwerk befestigt. Danach folgt in einem zweiten Schritt ein Ausrichten des Pfostens an der Grundplatte und somit relativ zu dem Bauwerk. In einem dritten Schritt wird der Pfosten nach erfolgtem Ausrichten und somit Justieren endgültig über die bereits befestigte Grundplatte an dem Bauwerk befestigt.

Beim abschließenden Befestigen kann vorgesehen sein, dass entlang den Befestigungsschrauben zwischen dem Pfosten und der Grundplatte Abstandshalter gedrückt, geklemmt oder eingespannt werden. Dabei können diese Abstandshalter bereits während der Vorbereitung entlang den Befestigungsschrauben, die Befestigungsschrauben ummantelnd, angeordnet werden. Es ist auch denkbar, dass die Abstandshalter erst bei dem endgültigen Befestigen entlang den Befestigungsschrauben zwischen dem Pfosten und der Grundplatte angeordnet werden. Insbesondere beim Einsatz variabler Abstandshalter, deren Länge verstellt werden kann, besteht die Möglichkeit, dass ein Abstand und/oder eine Senkrechtstellung des Pfostens zu dem Bauwerks feinjustiert wird.

In einer Ausführungsform wird die Abdeckplatte bei der Vorbereitung derart angeordnet, dass diese die Grundplatte abdeckt, wobei die Befestigungsschrauben und Löcher der Abdeckplatte durchgreifen. Beim endgültigen Befestigen wird auch die Abdeckplatte auf die Grundplatte gedrückt.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

Figur 1a zeigt eine schematische Darstellung einer Ausführungsform einer Grundplatte.

Figur 1b zeigt die Grundplatte aus Figur 1a in Schnittdarstellung.

Figur 2 zeigt in schematischer Schnittdarstellung einzelne Module einer ersten Ausführungsform des erfindungsgemäßen Pfostenbeschlags.

Figur 3a zeigt in schematischer Darstellung einen mit einem Pfostenbeschlag aus figur 2 an einem Bauwerk befestigten Pfosten.

Figur 3b zeigt die Anordnung aus Figur 3a aus einer um 90° gedrehten Perspektive,

Figur 4a zeigt in schematischer Darstellung eine Ausführungsform einer Abdeckplatte.

Figur 4b zeigt die Abdeckplatte aus Figur 4a in schematischer Schnittdarstellung.

Figur 5a zeigt in schematischer Darstellung eine Ausführungsform einer Gegenmutter.

Figur 5b zeigt die Gegenmutter aus Figur 5a in schematischer Schnittdarstellung.

Figur 6 zeigt in schematischer Darstellung einen mit einer zweiten Ausführungsform eines Pfostenbeschlags an einem Bauwerk befestigten Pfosten.

Die Figuren werden zusammenhängend und übergreifend beschrieben. Gleiche Bezugszeichen bezeichnen gleiche Bautei-1e.

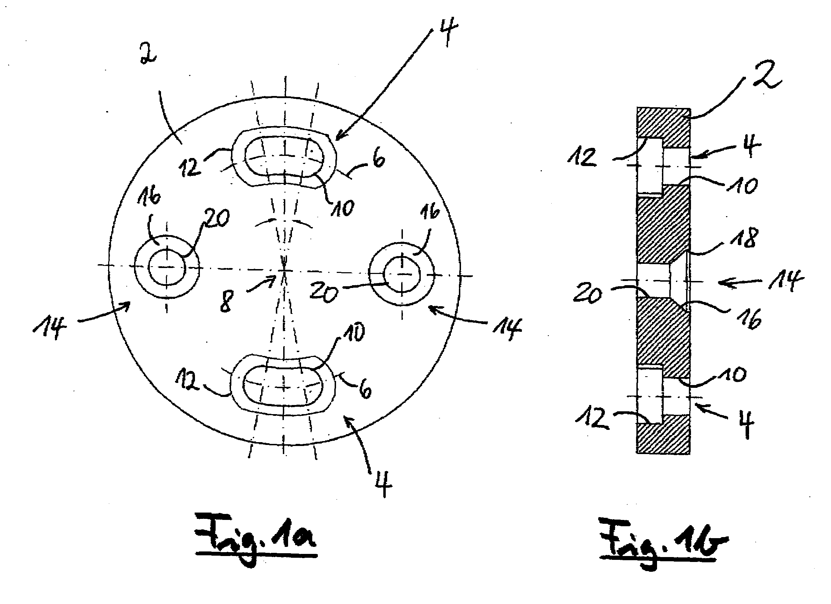

Die in Figur 1a schematisch dargestellte sowie in Figur 1b in schematischer Schnittdarstellung dargestellte Grundplatte 2 weist zwei Löcher 4 auf, die hier als gebogene Langlöcher ausgebildet sind und auf jeweils einem Abschnitt eines Kreisbogens 6 um einen Mittelpunkt 8 der Grundplatte 2 angeordnet sind.

Es ist vorgesehen, dass die beiden Löcher 4 jeweils einen ersten Lochabschnitt 10 und einen zweiten Lochabschnitt 12 aufweisen. Dabei weist jeweils ein erster Lochabschnitt 10 einen geringeren Querschnitt als der zweite Lochabschnitt 12 auf. Außerdem weist die Grundplatte 2 in vorliegender Ausführungsform zwei Befestigungslöcher 14 auf, die jeweils einen ersten Lochabschnitt 16 mit einer konischen Innenwandung und einer Ausnehmung 18 sowie einen zweiten Lochabschnitt 20 aufweisen, wobei der zweite Lochabschnitt 20 denselben Durchmesser wie der geringste Durchmesser des ersten Lochabschnitts 16 hat.

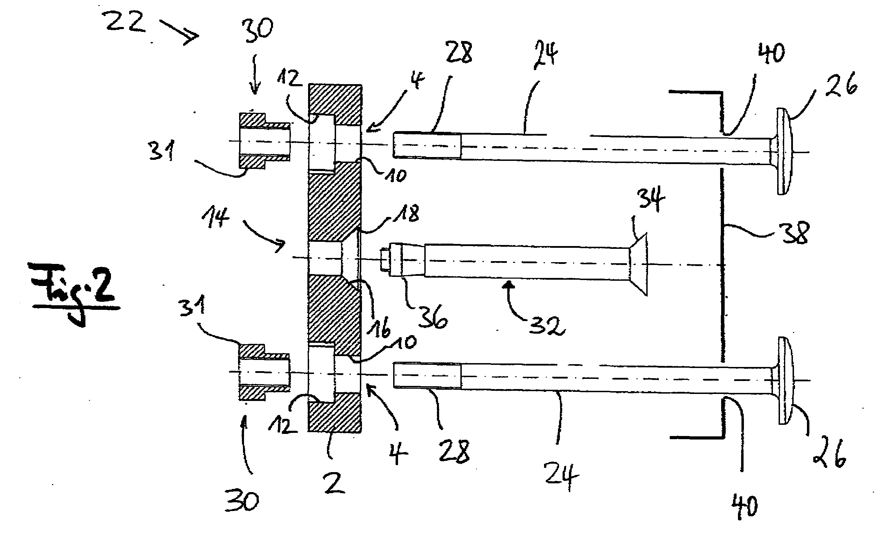

Figur 2 zeigt in schematischer Schnittdarstellung neben der in den Figuren 1a und 1b bereits vorgestellten Grundplatte 2 weitere Module eines Pfostenbeschlags 22, nämlich zwei Befestigungsschrauben 24, wobei jede Befestigungsschraube 24 an einem ersten Ende einen Kopf 26 und an einem zweiten Ende ein Gewinde 28 aufweist. Außerdem zeigt Figur 2 zwei Gegenmuttern 30 mit Köpfen 31, ein in dieser Ausführungsform als Schwerlastanker ausgebildetes Befestigungselement 32 mit einem Kopf 34 an einem ersten Ende sowie einen Verankerungsabschnitt 36 an einem zweiten Ende. In Figur 2 ist des weiteren in schematischer Schnittdarstellung eine Abdeckplatte 38 mit zwei Rundlöchern 40 für die Befestigungsschrauben 24 abgebildet.

Zur Befestigung der Grundplatte 2 an einem Bauwerk ist vorgesehen, dass die Grundplatte 2 über die zwei Befestigungselemente 32 an dem Bauwerk befestigt wird. Dabei sind die Befestigungselemente 32 dazu ausgebildet, die Befestigungsöffnungen 14 der Grundplatte 2 zu durchgreifen. Die Befestigungselemente 32 sind über die Verankerungsabschnitt 36 innerhalb des Bauwerks zu verankern. Außerdem liegen die Köpfe 34 an den ersten Lochabschnitten 16 mit der konischen Innenwandung an und sichern somit die Grundplatte 2 an dem Bauwerk.

Die Ausnehmung 18 weist eine Tiefe von mindestens 1 mm auf, so dass jeweils ein Befestigungselement 32 innerhalb der Grundplatte 2 zu versenken ist und somit dessen Kopf 34 mindestens 1 mm tiefer als eine dem Bauwerk abgewandte Außenseite der Grundplatte 2 liegt.

Zur Montage sind die zweiten Enden der Befestigungsschrauben 24 durch die Löcher 4 zu führen, die Gewinde 28 sind mit den Gegenmuttern 30 zu verschrauben. Es ist vorgesehen, dass Außendurchmesser der Befestigungsschrauben 24 sowie der Gewinde 28 der Befestigungsschrauben geringer als Querschnitte der ersten Lochabschnitte 10 der Löcher 4 sind. Ebenso weisen die Köpfe 31 der Gegenmuttern 30 einen geringeren Durchmesser als ein Querschnitt der zweiten Lochabschnitte 12 der Löcher 4 auf. Somit ist es möglich, die Befestigungsschrauben 24 relativ zu den Löchern 4, im vorliegenden Ausführungsbeispiel entlang den Löchern 4, zu bewegen. Die zweiten Lochabschnitte 12 der Löcher 4 sind derart ausgebildet, dass sich die Gegenmuttern 30 über ihre Köpfe 31 bei dem endgültigen Befestigen selbst verspannen und dabei die Befestigungsschrauben 24 anziehen.

Zum Befestigen des Pfostens 42 an dem Bauwerk 44 sind zunächst die Gegenmuttern 30 in die Löcher 4 einzusetzen. Die Gegenmuttern 30 sind derart ausgebildet, dass sie verschiedene Gewinde 28 der Befestigungsschrauben 24 aufnehmen können. Beim Andrehen der Befestigungsschrauben 24 zum endgültigen Befestigen des Pfostens 42 werden die Gegenmuttern 30 aufgrund der Form der Köpfe 31, innerhalb der zweiten Lochabschnitte 12 verklemmt.

Es ist vorgesehen, dass die Abdeckplatte 38 auf der Grundplatte 2 aufgesetzt wird. Die Abdeckplatte 38 ist im vorliegenden Ausführungsbeilspiel als ein ca. 0,8 mm dickes Edelstahlblech ausgebildet und derart abgekantet, dass sie die Grundplatte 2 abdeckt. Die Befestigungsschrauben 24 werden durch die zwei Rundlöcher 40 geführt. Mit den Abstandshaltern 48 wird durch Anziehen der Befestigungsschrauben 24 die Abdeckplatte 38 an die Grundplatte 2 gedrückt. Dies hat zur Folge, dass die Befestigungen durch die Abdeckplatte 38 abgedeckt sind.

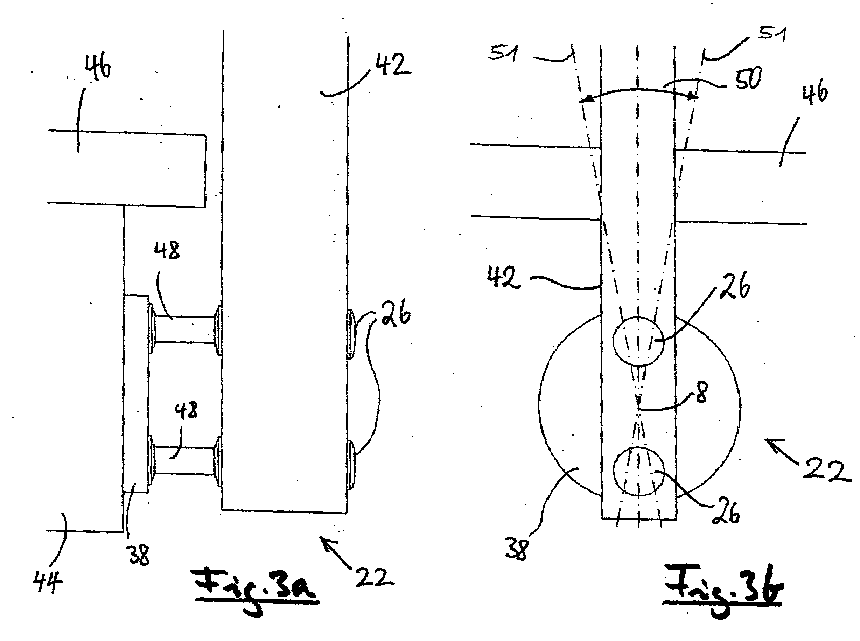

Figur 3a zeigt in seitlicher schematischer Darstellung einen Pfosten 42 über den Pfostenbeschlag 22 an einem Bauwerk 44, das hier als Betonlauf oder Betondecke ausgebildet ist, mit einer Stufe 46 einer Treppe befestigt ist. Von den bereits vorgestellten Komponenten des Pfostenbeschlags 22 sind in den Figuren 3a und 3b nunmehr lediglich die Köpfe 26 der Befestigungsschrauben 24, die Abdeckplatte 38 sowie Abstandshalter 48 zu erkennen.

Die von der Abdeckplatte 38 abgedeckte Grundplatte 2 ist über die Befestigungselemente 32 an dem Bauwerk 44 befestigt. Die Befestigungsschrauben 24 durchlaufen ausgehend von den Köpfen 26 Aufnahmelöcher des Pfostens 42 und die Abstandshalter 48. Die Befestigungsschrauben 24 sind an ihren zweiten Enden über die Gewinde 28 mit den Gegenmuttern 30 verschraubt. Bei der in Figur 3a gezeigten Anordnung sind somit der Pfosten 42, die Abstandshalter 48 und die Abdeckplatte 38 über die Befestigungsschrauben 24 zwischen den Köpfen 26 sowie der Grundplatte 2, an der die Befestigungsschrauben 24 mit den Gegenmuttern 30 befestigt sind, eingespannt bzw. eingeklemmt.

Figur 3b zeigt die Anordnung aus Figur 3a in einer um 90° gedrehten Perspektive. Dabei ist schematisch angedeutet, wie der Pfosten 42 vor einer endgültigen Befestigung an dem Bauwerk 44 relativ zu der Grundplatte 2 und somit auch zu dem Pfostenbeschlag 22 bzw. dem Bauwerk 44 zu verschwenken ist. Vor dem endgültigen Befestigen ist vorgesehen, dass die Befestigungsschrauben 24 und somit der mit den Befestigungsschrauben 24 verbundene Pfosten 42 entlang den in Figur 3b durch die Abdeckplatte 38 verdeckten Löchern 4 zu führen und somit zu verschieben ist.

Dabei können sich die Befestigungsschrauben 24 um den Mittelpunkt 8 entlang den Kreisbahnen 6, wie in Figur 1a bereits angedeutet, drehen und somit hin und her bewegen. Ein Einstellbereich 50, der einem Monteur bei, einer Justierung des Pfostens 42 hierbei zur Verfügung steht, ist durch die strichpunktierten Geraden 51, die sich im Mittelpunkt 8 kreuzen, gegeben.

Der Pfosten 42 ist somit um den Mittelpunkt 8 entlang den Löchern 4 zu verschwenken. Es ist somit möglich, den Pfosten 42 vertikal bzw. senkrecht zu der Stufe 46 auszurichten.

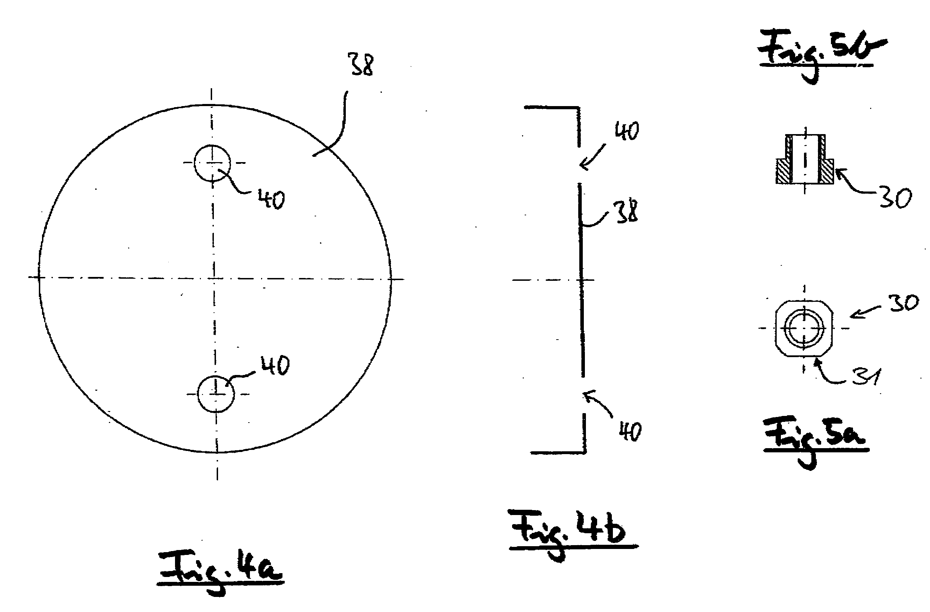

Figur 4a zeigt in schematischer Darstellung die Abdeckplatte 38 mit den Rundlöchern 40. Figur 4b zeigt diese Abdeckplatte 38 in schematischer Schnittdarstellung.

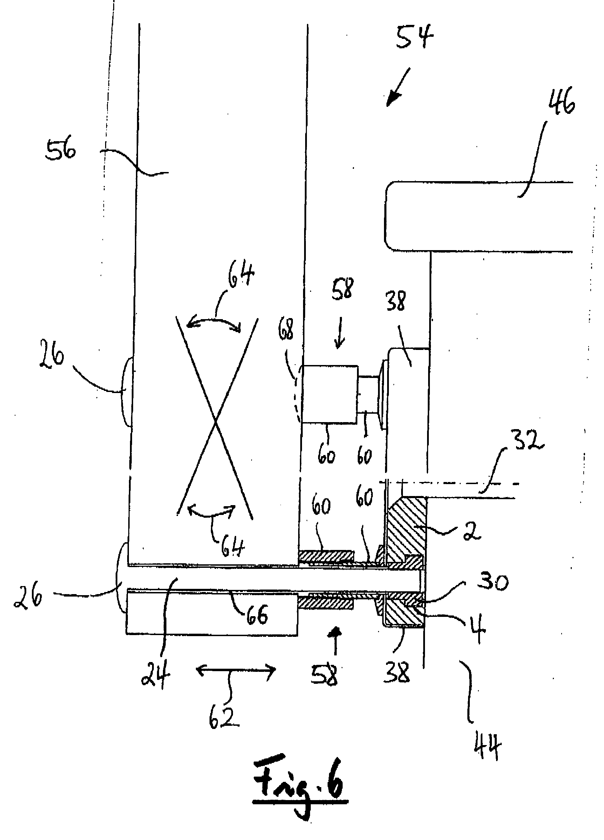

Die Figuren 5a und 5b zeigen jeweils eine der vorgestellten Gegenmuttern 30, wobei anhand von Figur 5a eine Ausgestaltung eines Kopfs 31 der Gegenmutter zu erkennen ist, der im Querschnitt quadratisch mit abgerundeten Ecken ausgebildet ist.

Figur 6 zeigt in schematischer Darstellung eine zweite Ausführungsform eines Pfostenbeschlags 54, der zur Befestigung eines runden Pfostens 56 an dem Bauwerk 44 ausgebildet ist. Dieser Pfostenbeschlag 54 umfasst wie der in erster Ausführungsform beschriebene Pfostenbeschlag 22 eine Grundplatte 2 mit Löchern 4, in denen. Befestigungsschrauben 24 zu führen sind, wobei diese Befestigungsschrauben 24 mit Gegenmuttern 30, die in den Löchern 4 angeordnet sind, verschraubt sind. Außerdem ist die Grundplatte 2 durch eine Abdeckplatte 38 abgedeckt und über ein Befestigungselement 32 an dem Bauwerk 44 befestigt.

Im Unterschied zu dem in den voranstehenden Figuren in erster Ausführungsform vorgestellten Pfostenbeschlag 22 weist der Pfostenbeschlag 54 aus Figur 6 variable Abstandshalter 58, die jeweils aus zwei über ein Gewinde koaxial miteinander verschraubten Rohren 60 gebildet sind.

Durch Drehen dieser beiden Rohre 60 relativ zueinander ist die jeweilige Länge der variablen Anstandshalter 58 einzustellen. Der Pfosten 56 ist mittels dieser variablen Abstandshalter 58 in einer durch den Doppelpfeil 62 festgelegten Querrichtung senkrecht zu dem Bauwerk 44 hin- und herzubewegen. Somit ist eine Feinjustierung des Abstands des Pfostens 58 zu dem Bauwerk 44 möglich. Bei unterschiedlicher Einstellung der jeweiligen Länge der Abstandshalter 58 ist der Pfosten 56 entlang den gebogenen Doppelpfeilen 64 zudem durch Verschwenken auszurichten, so dass die Senkrechtstellung des Pfostens 56 zu regulieren ist.

In dieser Figur 6 ist anhand der Schnittdarstellung im unteren Bereich gut zu erkennen, wie eine der Befestigungsschrauben 24 durch ein Aufnahmeloch 66 des Pfostens 56 geführt ist. Der Kopf 26 der Befestigungsschraube 24 liegt an der Außenseite des Pfostens 56 an und deckt dabei das Aufnahmeloch 66 ab.

Durch geeignete Ausbildung von Anschlussbeschlägen, hier den Abstandshaltern 58, ist die Befestigung von runden Pfosten 56 möglich. In vorliegender Ausführungsform weist das äußere der beiden Rohre 60 einen gebogenen Abschnitt 68 auf, über den das Rohr 60 und somit der Abstandshalter 58 an dem runden Pfosten 56 bündig anliegt.

## Patentansprüche

1. Pfostenbeschlag, der zum Befestigen eines Pfostens (42, 56) an einem Bauwerk (44) ausgebildet ist und eine Grundplatte (2) sowie zwei Befestigungsschrauben (24) umfasst, bei dem die Grundplatte (2) zwei Löcher (4) zur Aufnahme jeweils einer mit dem Pfosten (42, 56) zu verbindenden Befestigungsschraube (24) aufweist, wobei die Löcher (4) derart ausgebildet sind, dass jeweils eine Befestigungsschraube (24) in jeweils einem Loch (4) zu führen ist, so dass der mit den Befestigungsschrauben (24) verbundene Pfosten (42, 56) relativ zu der Grundplatte (2) zu verschwenken ist.

2. Pfostenbeschlag nach Anspruch 1, der eine Grundplatte (2) nach einem der Ansprüche 10 bis 15 umfasst.

3. Pfostenbeschlag nach Anspruch 1 oder 2, der zwei mit den Befestigungsschrauben (24) zu verschraubende Gegenmuttern (30) umfasst.

4. Pfostenbeschlag nach einem der voranstehenden Ansprüche, der zum Befestigen an dem Bauwerk (44) mit zumindest zwei Befestigungselementen (32) vorgesehen ist.

5. Pfostenbeschlag nach einem der voranstehenden Ansprüche, bei dem die Befestigungsschrauben (24) durch Aufnahmelöcher des Pfostens (42, 56) zu führen sind und Köpfe (26) umfassen, die dazu ausgebildet sind, an einer Außenseite des Pfostens (42, 56), die Aufnahmelöcher abdeckend, anzuliegen.

6. Pfostenbeschlag nach einem der voranstehenden Ansprüche, der zwei Abstandshalter (48, 58) umfasst, wobei durch jeweils einen Abstandshalter (48, 58) eine Schraube (42, 56) zu führen ist und wobei die Abstandshalter (48, 58) zwischen den Pfosten (42, 56) und der Grundplatte (2) anzuordnen sind.

7. Pfostenbeschlag nach Anspruch 6, bei dem die Länge der Abstandshalter (48, 58) einstellbar ist, so dass der Pfosten (42, 56) senkrecht zu dem Bauwerk (44) feinzujustieren ist.

8. Pfostenbeschlag nach einem der voranstehenden Ansprüche, der eine zum Abdecken der Grundplatte (2) ausgebildete Abdeckplatte (38) mit zwei Rundlöchern (40), durch die die Befestigungsschrauben (24) zu führen sind, umfasst.

9. Grundplatte für einen Pfostenbeschlag (22) zum Befestigen eines Pfostens (42, 56) an einem Bauwerk (44), die zwei Löcher (4) zur Aufnahme jeweils einer mit dem Pfosten (42, 56) zu verbindenden Befestigungsschraube (24) aufweist, wobei die Löcher (4) derart ausgebildet sind, dass jeweils eine Befestigungsschraube (24) in jeweils einem Loch (4) zu führen ist, so dass der mit den Befestigungsschrauben (24) verbundene Pfosten (42, 56) relativ zu der Grundplatte (2) zu verschwenken ist.

10. Grundplatte nach Anspruch 9, bei der die Löcher (4) als gebogene Langlöcher ausgebildet sind, so dass die Befestigungsschrauben (24) entlang dieser Löcher (4) zu führen sind.

11. Grundplatte nach Anspruch 9 oder 10, bei der die Löcher (4) auf einer Kreisbahn (6) um den Mittelpunkt (8) der Grundplatte (2) angeordnet sind.

12. Grundplatte nach einem der Ansprüche 9 bis 11, bei der jeweils eines der Löcher (4) zur Aufnahme einer Gegenmutter (30), die mit jeweils einer Befestigungsschraube (24) zu verschrauben ist, ausgebildet ist.

13. Grundplatte nach einem der Ansprüche 9 bis 12, die mindestens zwei Befestigungslöcher (14) aufweist, wobei jeweils ein Befestigungsloch (14) zur Aufnahme eines im Bauwerk (44) zu verankernden Befestigungselements (32) ausgebildet ist.

14. Grundplatte nach Anspruch 13, bei der jeweils ein Befestigungsloch (14) eine Ausnehmung (18) aufweist, in der ein Kopf (34) des Befestigungselements (32) zu versenken ist.

15. Grundplatte nach einem der Ansprüche 9 bis 14, die einen runden Querschnitt aufweist.

16. Verfahren zum Befestigen eines Pfostens (42, 56) an einem Bauwerk (44) mittels einer Grundplatte (2), bei dem zwei Befestigungsschrauben (24) in Löchern (4) der Grundplatte aufgenommen werden und jeweils eine Befestigungsschraube (24) mit dem Pfosten (42, 56) verbunden wird, und bei dem der Pfosten (42, 56) zum Ausrichten relativ zu der Grundplatte (2) verschwenkt wird, wobei jeweils eine Befestigungsschraube (24) in jeweils einem Loch (2) geführt wird.

17. Verfahren nach Anspruch 16, bei dem die Befestigungsschrauben (24) zum Verschwenken des Pfostens (42, 56) entlang der als gebogene Langlöcher ausgebildeten Löcher (4) geführt werden.

18. Verfahren nach Anspruch 16 oder 17, bei dem in einem ersten Schritt die Grundplatte (2) über Befestigungselemente (32) an dem Bauwerk (44) befestigt und in einem zweiten Schritt der Pfosten (42, 56) zu der befestigten Grundplatte (2) ausgerichtet wird, und bei dem der Pfosten (42, 56) in einem dritten Schritt endgültig befestigt wird.

19. Verfahren nach einem der Ansprüche 16 bis 18, bei dem zum endgültigen Befestigen des Pfostens (42, 56) vorgesehen ist, dass der Pfosten (42, 56) entlang der Befestigungsschrauben (24) zwischen Köpfen (26) der Befestigungsschrauben (24) und der Grundplatte (2) eingespannt wird, wobei die Befestigungsschrauben (24) über Gegenmuttern (30), die in den Löchern (4) aufgenommen sind, an der Grundplatte (2) verschraubt werden.

20. Verfahren nach Anspruch 19, bei dem zum endgültigen Befestigen zwischen dem Pfosten (42, 56) und der Grundplatte (2) zwei Abstandshalter (48, 58), die die. Befestigungsschrauben (24) zumindest teilweise ummanteln, gedrückt werden.

21. Verfahren nach Anspruch 20, bei dem eine Länge der Abstandshalter (48, 58) variiert und somit der Pfosten (42, 56) senkrecht zu dem Bauwerk (44) feinjustiert wird.
